# EUROPEAN PATENT SPECIFICATION

(11) **EP 2 774 475 B1**
(45) Date of publication and mention of the grant of the patent: **10.10.2018**
(21) Application number: 14157769.2
(22) Date of filing: 05.03.2014
(51) Int. Cl.: A01G 5/02

(54) **Apparatus and method for preparing mixed bouquets**
Vorrichtung und Verfahren zur Zusammenstellung gemischter Bouquets
Appareil et méthode pour la préparation de bouquets mixtes

(30) Priority: 05.03.2013 NL 2010398
(43) Date of publication of application: 10.09.2014
(73) Proprietor: P.H. Ruigrok Kwekerij B.V., 2182 GZ Hillegom (NL)
(72) Inventor: Ruigrok, Peter, 2182 GZ Hillegom (NL)
(74) Representative: Altenburg, Bernardus Stephanus Franciscus

(56) References cited:
- JP-A- H11 155 371
- US-A- 4 041 672

## Description

The present invention relates to an apparatus for preparing mixed bouquets by positioning plant parts,
wherein the plant parts
- each comprise a stem, and
- each have a view end and a stem end; and
wherein the apparatus
- comprises an endless transporting device for forming the mixed bouquets on the endless transporting device, wherein the endless transporting device has a transporting surface which is provided with a plurality of reference organs for positioning the view ends of the plant parts, which reference organs are distributed in the direction of transport of the endless transporting device over the endless transporting device, and
- is arranged for supporting the mixed bouquets during the forming thereof using the plant parts, where the endless transporting device comprises a plurality of positioning organs in the direction of transport, wherein a positioning organ comprises the reference organ and two arm elements.

An apparatus according to the preamble is known from Dutch patent application 1038154. Such an apparatus enables the mass production of a desired number of equal mixed bouquets, after which a desired number different equal mixed bouquets can be formed using the device. The known apparatus comprises a number of conveyor belts which during operation move with exactly the same speed. On the transport surface thereof the conveyor belts are provided with separating organs yielding positioning compartments. The apparatus also comprises reference organs formed by upright elements which form a head partition. During use, plant parts such as flowers, are then placed with the flower or bud against the head partition, which head partition thus acts as an abutment. The stems of the plant parts are placed within predetermined positioning compartments. Depending on the bouquet to be formed, different positioning compartments are used. The distance between conveyor belts can be increased or reduced, depending on the length of the plant parts, so depending on the height of the bouquet to be formed.

An apparatus according to the preamble is known from JP H11 155371. It discloses an apparatus for preparing bouquets comprising a stationary support for stems of flowers to guide them to pinching organs to hold the stems while being defoliated.

The object of the present application is to provide an alternative apparatus for effectively preparing mixed bouquets.

To this end, the apparatus according to the preamble is characterized in that the positioning organ comprises a support (120,
wherein
- the endless transporting device is with reference to the direction of transport at the location of the reference organ provided with the positioning organ and at a distance of the reference organ concerned transverse to the direction of transport of the endless transporting device with the support for supporting the stems at a distance of the transport surface of the endless transporting device relatively close to the stem ends,
- the arm elements of the positioning organ are situated between the reference organ and the accompanying support for receiving the plant parts relatively close to the view ends, and
- the positioning organs are re-adjustable, the reference organs and the supports being re-adjustable relative to each other.

In this way the apparatus can be adapted to the bouquets to be formed, as a result of which these can be composed more beautifully. The re-adjustment makes it possible to adapt the apparatus to the bouquets to be formed, as a result of which these can obtain the desired form even more precisely.

The endless transporting device is for example a carousel. The two arm elements can for example be formed by a bent strip of metal, such as in the shape of a semicircle, and may therefore be 1 part. They serve to support a relatively broad part of the bouquet inbetween the stem ends and the view ends, and make sure that the bouquet will not sag during the forming thereof, especially sidewards. In the case of flowers the view ends are the flower heads or flower buds. The reference organ is for example a plate that extends upwardly from the transport surface and is oriented in the direction of transport. At the side of the support the plate can be non-flat, such as convex for non-standard bouquets or concave for a traditional bouquet. The support is for example a U-shaped fork with two arms, as a result of which the stems near the stem ends are supported at a distance of the transport surface. Compared to the use of compartments with the known device of NL1038154, when using the device according to the invention it is easier for the production workers who have to prepare the bouquets to recognize the place where the plant parts have to be positioned. The support keeps the stem ends at a distance above the transport surface. This reduces the likelihood of lopsidedly shaped bouquets for example by sagging. It will also be easier to form bouquets wherein the stems are twisted; meaning that when looking at a finished bouquet from above, the upper and lower ends of stems are slightly twisted (counter)clockwise relative to the centre line of the bouquet as seen from above.

US4041672 describes a device for bundling broccoli using an apparatus comprising a plurality of positioning organs on an endless transporting device.

According to a favourable embodiment, the endless transporting device is a conveyor belt.

Compared to a carousel this can be stocked up easily.

According to a favourable embodiment, the height of the supports relative to the surface of the endless transporting device is adjustable.

In this way the centre line of the bouquet that is formed can be kept mainly transverse to the reference organs, which facilitates the making of a well shaped bouquet. Mainly transverse to the reference organ will in practice also mean mainly horizontal.

According to a favourable embodiment, the distance between the reference organs and the supports is adjustable.

In this way the device can be adapted to the length of the plant parts or, in other words, to the height of the bouquets to be formed.

According to a favourable embodiment, the endless transporting device is provided with guides, wherein a guide
- comprises a base which extends transverse to the direction of transport and is connected with the transport surface,
- comprises a guide organ which co-operates with the base, which guide organ in a non-fixed state is movable in a transverse direction relative to the base and can be fixed in a first position and in a second position, and
the reference organ and the support are attached at different parts of the guide chosen from the base and the guide organ.

Thus, the distance between the support and the reference organ can be varied in a simple way. In case of a conveyor belt the base will, for example, be connected to the conveyor belt by means of two or more bolts or glue on a line transverse to the direction of transport.

According to a favourable embodiment, the distance between the two arm elements is adjustable.

In this way, as desired, a relatively thick or a relatively thin bouquet can be formed, wherein the desired appearance of the formed bouquet can be better guaranteed.

According to a favourable embodiment, the reference organ comprises a material that can be attracted by a magnet, and on the reference organ a reference aid can be attached, wherein the reference aid also comprises a material that can be attracted by a magnet and at least one material that can be attracted by a magnet of the reference organ and the reference aid comprises a magnet.

The material that can be attracted by a magnet is for example iron or optionally nickel. This makes it possible to attach reference aids, such as for example cups provided at a bottom side with a permanent magnet. For positioning the flowers these can be inserted into the cups with the flower or bud thereof, as a result of which the position thereof in the bouquet can be determined accurately.

According to a favourable embodiment, the reference organ comprises a first central section and a second peripheral section, wherein the first central section and the second peripheral section lie parallel relative to each other in different planes such that the distance to the support transverse to the direction of movement is larger for the first central section than for the second peripheral section.

In this way, a bouquet wherein the view ends are situated in two different planes can be formed more easily. The second peripheral section has for example a circular recess as a result of which view ends can be inserted against the first central section.

Finally, the present invention relates to method for preparing hand bouquets, wherein an apparatus according to one of the claims 1 to 9 is used and plant parts are placed
- with the view ends thereof against the reference organ, and
- with crossed stems,
on a positioning organ for forming the mixed bouquet.

In this way, a so-called hand bouquet can be formed using the apparatus according to the invention. More specifically, the plant parts are placed on the support and between the arm elements and are supported by these. The invention also relates to variants of the method in any combination such as enabled by the preferred embodiments of the device. For these preferred embodiments the measures of the subclaim concerned will then be used.

The present invention will now be illustrated with reference to the drawing where
Fig. 1 shows a perspective view of a part of a device according to the invention;
Fig. 2 shows a front view of a positioning organ of the device of Fig. 1;
Fig. 3 shows a top view of the positioning organ of Fig. 2;
Fig. 4 shows a side view of the positioning organ of Fig. 2; and
Fig. 5 shows a side view according to Fig. 4 with the positioning organ after re-adjustment thereof.

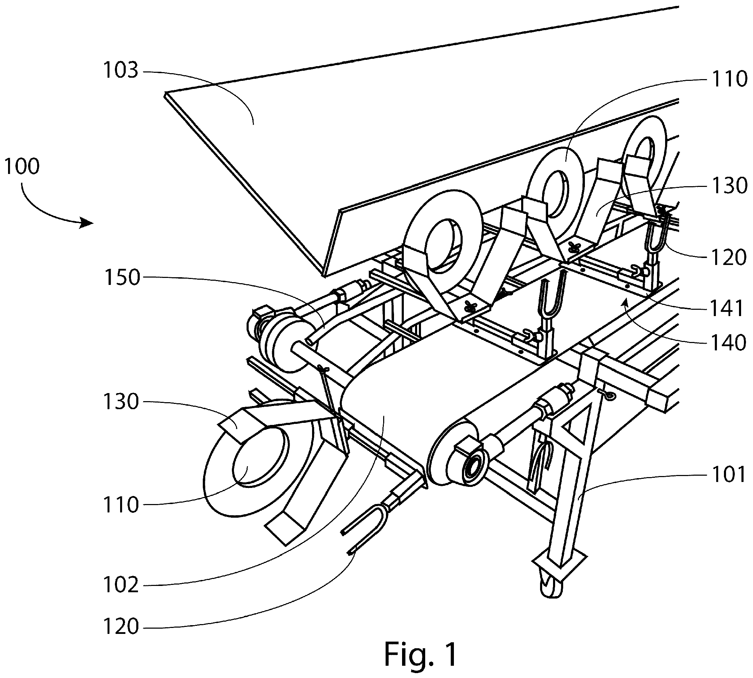

Fig. 1 shows a part of an apparatus 100 according to the invention, which comprises a frame 101 provided with an endless transporting device 102 in the shape of a conveyor belt 102. Further, a stock shelve 103 is shown for plant parts (not shown) such as flowers or decorative leaves which will be formed into bouquets.

In the direction of transport thereof the conveyor belt 102 is provided with a plurality of positioning organs which comprise reference organs 110 and supports 120. Between the reference organs 110 and supports 120 arm elements 130 are provided. During use of the apparatus 100 plant parts are placed with the view ends thereof against the reference organs 110, whereas the stems of the plant parts are placed in the supports 120. The mixed bouquets that are being formed are held together by the arm elements 130.

For serial production of bouquets by a number of production workers these latter stand at stationary places along the conveyor belt 102. They take a plant part of the stock shelve 103 and place it on a passing support 120 between both arm elements 130 against reference organ 110. In this way the mixed bouquets will get the desired compositions and are brought in the desired shape effectively.

The positioning organs comprise guides 140 for adapting the positioning organs for the mixed bouquets to be prepared, and the guides 140 have flanges 141 with which the positioning organs are fixed on the conveyor belt 102, as will be elucidated hereinafter. A free end of each guide 140 can rest on an support bar 150 which extends in the longitudinal direction of the apparatus 100.

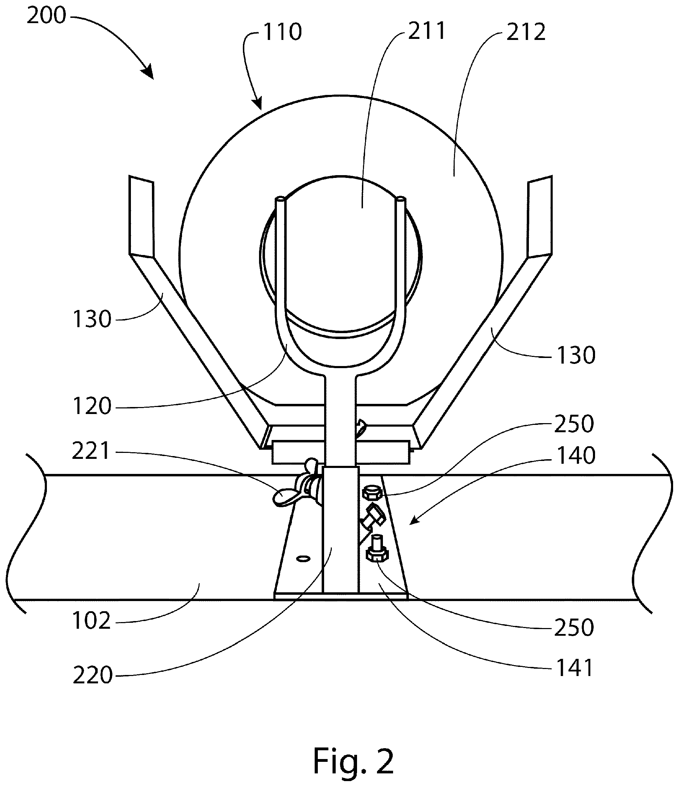

Fig. 2 shows a front view on a positioning organ 200 which is provided on the conveyor belt 102. The positioning organ 200 comprises a reference organ 110, a support 120 and two arm elements 130 attached to the guide 140 of the positioning organ 200.

With the embodiment shown here, the support 120 is U-shaped and re-adjustable in height by means of an upright guide 220 and can be fixed at a desired height using a butterfly nut 221. The height will almost always be chosen such that the centre line, through the final bouquet prepared using the apparatus 100, is transverse to the reference organ 110. In other words, the centre line will be substantially horizontal.

Fig. 2 shows that the reference organ 110 comprises a circular first central section 211 and a second peripheral section 212.

In the embodiment shown here, for fixing the guide 140 two bolts with accompanying nuts 250 have been used. The bolts are in a line transverse to the direction of transport of the conveyor belt 102, as a result of which the guide 140 can pass a roll such as a driven roll of the conveyor belt 102 without trouble.

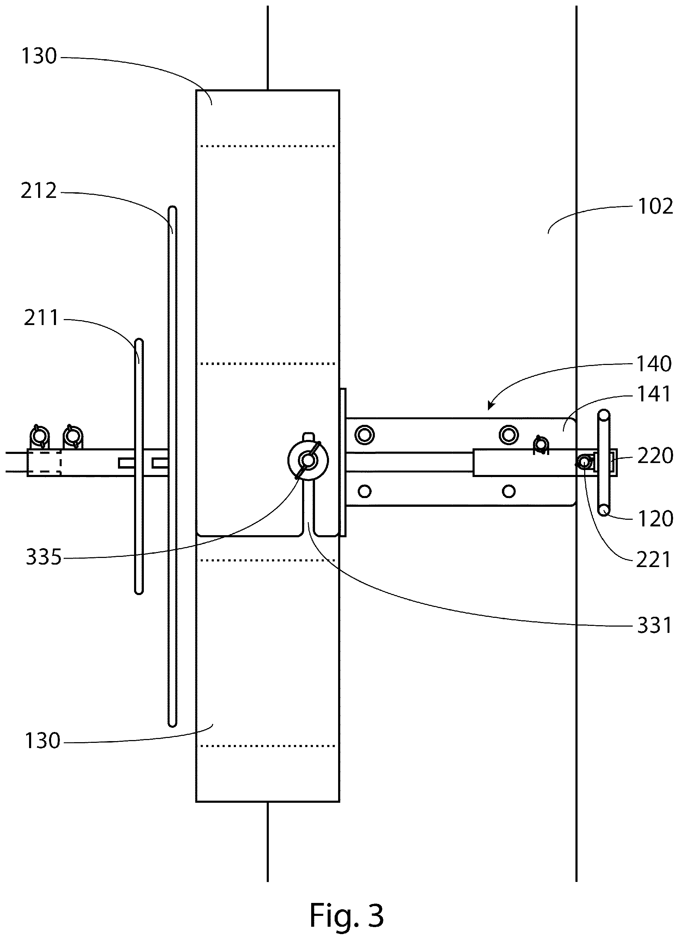

Fig. 3 shows a top view of the positioning organ 200 of Fig. 2. It can be seen that in the embodiment shown an arm element 130 has a slit 331. This makes it possible to adjust the distance between the upright parts of the arm elements 130. The arm elements 130 are fixed using butterfly nut 335. The distance between the upright ends of the arm elements 130 is chosen depending on the size of the upper side of the final bouquet to be formed.

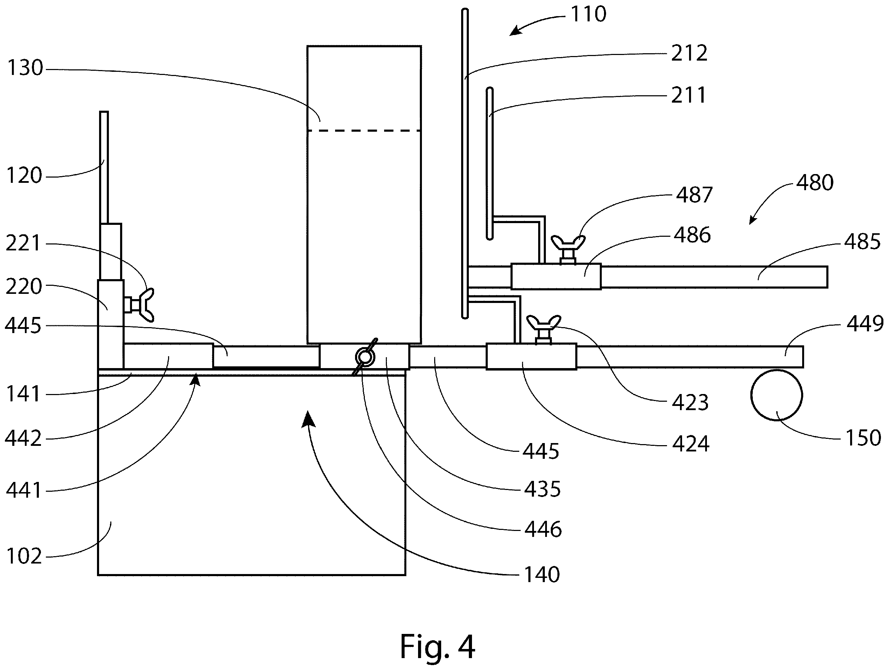

Fig. 4 shows a side view of the positioning organ 200 of Fig. 2. The guide 140 comprises a base 441. The base 441 comprises a box profile 442 with a square cross section provided with a flange 141. As explained for Fig. 2, the guide 140 is attached to the conveyor belt 102 by means of bolts and nuts 250, in particular by means of the flange 141. In Fig. 4 we can see the end of the conveyor belt 102. The guide 140 further comprises a guide organ 445, also shaped as a box profile with a square cross section which in the embodiment shown here can be moved in the base 441 and can be fixed relative to the base by means of a butterfly nut 441 (not shown). Since the reference organ 110 and the arm elements 130 are connected with the guide organ 445, the distance to the support 120 for the reference organ 110 and the arm elements 130 can be adjusted simultaneously.

The arm elements 130 are re-adjustable relative to the guide organ 445, to which end an arm element 130 at the lower side thereof is provided with a box profile 435 having a square cross section. The arm elements 130 can be fixed to the guide organ 445 by means of a butterfly nut 446.

In a similar way the second peripheral section 212 is provided with a box profile 424 and can be fixed to the guide organ 445 by means of butterfly nut 423.

For re-adjusting the first central section 211 a secondary guide 480 is provided, which works in the same way as described before for the second peripheral section 212. To this end it has a guide organ 485 and a box profile 486 into which the secondary guide organ 485 is introduced. The box profile 486 carries the first central section 211 and is fixed to the secondary guide organ 485 by means of a butterfly nut 487, and therefore also fixed relative to the second peripheral section 212.

In order to be able to carry the weight of the bouquet, the free end 449 of the guide organ 445 can rest on the support bar 150 while the conveyor belt 102 is moving.

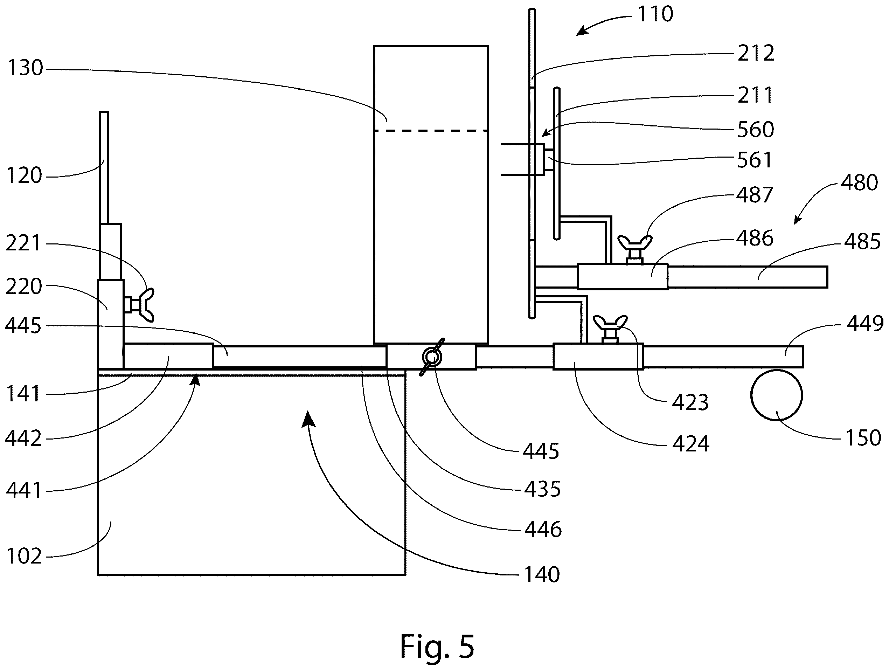

Fig. 5 essentially corresponds to Fig. 4. However, the arm elements 130 and the reference organ 110 have been shifted in relation to the guide organ 445.

Fig. 5 also shows a reference aid 560 in the shape of a cup, which cup comprises a magnet 561 with which the cup is centrally provided onto the central section 211 of the reference organ 110. A flower head can be inserted into the cup, as a result of which the position thereof is determined accurately. Of course, the reference organ can be provided with more reference aids, for setting a pattern. The reference aid 560 can also act as an abutment in order to make sure that the view end of the plant part concerned will in fact protrude to a smaller extent from the bouquet.

## Claims

1. An apparatus (100) for preparing mixed bouquets by positioning plant parts,
wherein the plant parts
- each comprise a stem, and
- each have a view end and a stem end; and
wherein the apparatus (100)
- comprises an endless transporting device (102) for forming the mixed bouquets on the endless transporting device (102), wherein the endless transporting device (102) has a transporting surface which is provided with a plurality of reference organs (110) for positioning the view ends of the plant parts, which reference organs (110) are distributed in the direction of transport of the endless transporting device (102) over the endless transporting device (102), and
- is arranged for supporting the mixed bouquets during the forming thereof using the plant parts, where the endless transporting device (102) comprises a plurality of positioning organs (200) in the direction of transport, wherein a positioning organ (200) comprises the reference organ (110) and two arm elements (130) ;
**characterized in that** the positioning organ (200) comprises a support (120), wherein
- the endless transporting device (102) is with reference to the direction of transport at the location of the reference organ (110) provided with the positioning organ (200) and at a distance of the reference organ (110) concerned transverse to the direction of transport of the endless transporting device (102) with the support (120) for supporting the stems at a distance of the transport surface of the endless transporting device (102) relatively close to the stem ends,
- the arm elements (130) of the positioning organ are situated between the reference organ (110) and the accompanying support (120) for receiving the plant parts relatively close to the view ends, and
- the positioning organs (200) are re-adjustable, the reference organs (110) and the supports (120) being re-adjustable relative to each other.

2. The apparatus (100) according to claim 1, wherein the endless transporting device (102) is a conveyor belt (102).

3. The apparatus (100) according to claim 1 or 2, wherein the height of the supports (120) relative to the surface of the endless transporting device (102) is adjustable.

4. The apparatus (100) according to any of the preceding claims, wherein the distance between the reference organs (110) and the supports (120) is adjustable.

5. The apparatus (100) according to any of the preceding claims, wherein the endless transporting device (102) is provided with guides (140), wherein a guide (140)
- comprises a base (441) which extends transverse to the direction of transport and is connected with the transport surface,
- comprises a guide organ (445) which co-operates with the base (441), which guide organ (445) in a non-fixed state is movable in a transverse direction relative to the base (441) and can be fixed in a first position and in a second position, and
the reference organ (110) and the support (120) are attached at different parts of the guide (140) chosen from the base (441) and the guide organ (445).

6. The apparatus (100) according to any of the preceding claims, wherein the distance between the two arm elements (130) is adjustable.

7. The apparatus (100) according to any of the preceding claims, wherein the reference organ (110) comprises a material that can be attracted by a magnet, and on the reference organ (110) a reference aid (560) can be attached, wherein the reference aid (560) also comprises a material that can be attracted by a magnet and at least one material that can be attracted by a magnet of the reference organ (110) and the reference aid (560) comprises a magnet (561).

8. The apparatus (100) according to any of the preceding claims, wherein the reference organ (110) comprises a first central section (211) and a second peripheral section (212), wherein the first central section (211) and the second peripheral section (212) lie parallel relative to each other in different planes such that the distance to the support (120) transverse to the direction of movement is larger for the first central section (211) than for the second peripheral section (212).

9. Method for preparing hand bouquets, **characterized in that** an apparatus (100) according to one of the claims 1 to 8 is used and plant parts are placed
- with the view ends thereof against the reference organ (110), and
- with crossed stems,
on a positioning organ (200) for forming the mixed bouquet.

## Patentansprüche

1. Einrichtung (100) zum Anfertigen gemischter Sträuße durch Positionieren von Pflanzenteilen,
wobei die Pflanzenteile
- jeweils einen Stiel umfassen und
- jeweils ein Ansichtsende und ein Stielende aufweisen;
und wobei die Einrichtung (100)
- eine Endlostransportvorrichtung (102) zum Ausbilden der gemischten Sträuße auf der Endlostransportvorrichtung (102) umfasst, wobei die Endlostransportvorrichtung (102) eine Transportoberfläche aufweist, die mit mehreren Bezugselementen (110) zum Positionieren der Ansichtsenden der Pflanzenteile versehen ist, wobei die Bezugselemente (110) in der Transportrichtung der Endlostransportvorrichtung (102) über die Endlostransportvorrichtung (102) verteilt sind, und
- zum Stützen der gemischten Sträuße während des Ausbildens davon unter Verwendung der Pflanzenteile ausgestaltet ist, wobei die Endlostransportvorrichtung (102) mehrere Positionierungselemente (200) in der Transportrichtung umfasst, wobei ein Positionierungselement (200) das Bezugselement (110) und zwei Armelemente (130) umfasst;
**dadurch gekennzeichnet, dass** das Positionierungselement (200) eine Stütze (120) umfasst, wobei
- die Endlostransportvorrichtung (102) in Bezug auf die Transportrichtung an der Position des Bezugselements (110) mit dem Positionierungselement (200) und in einem Abstand zu dem Bezugselement (110) hinsichtlich einer Querrichtung zu der Transportrichtung der Endlostransportvorrichtung (102) mit der Stütze (120) zum Stützen der Stiele in einem Abstand zu der Transportoberfläche der Endlostransportvorrichtung (102) relativ nah an den Stielenden versehen ist,
- sich die Armelemente (130) des Positionierungselements zwischen dem Bezugselement (110) und der zugehörigen Stütze (120) zum Aufnehmen der Pflanzenteile relativ nah an den Ansichtsenden befinden, und
- die Positionierungselemente (200) nachstellbar sind, die Bezugselemente (110) und die Stützen (120) relativ zueinander nachstellbar sind.

2. Einrichtung (100) nach Anspruch 1, wobei die Endlostransportvorrichtung (102) ein Förderband (102) ist.

3. Einrichtung (100) nach Anspruch 1 oder 2, wobei die Höhe der Stützen (120) relativ zu der Oberfläche der Endlostransportvorrichtung (102) einstellbar ist.

4. Einrichtung (100) nach einem der vorhergehenden Ansprüche, wobei der Abstand zwischen den Bezugselementen (110) und den Stützen (120) einstellbar ist.

5. Einrichtung (100) nach einem der vorhergehenden Ansprüche, wobei die Endlostransportvorrichtung (102) mit Führungen (140) versehen ist, wobei eine Führung (140)
- eine Basis (441) umfasst, die sich quer zu der Transportrichtung erstreckt und mit der Transportoberfläche verbunden ist,
- ein Führungselement (445) umfasst, das mit der Basis (441) zusammenwirkt, wobei das Führungselement (445) in einem nicht fixierten Zustand in einer Querrichtung relativ zu der Basis (441) bewegbar ist und in einer ersten Position und in einer zweiten Position fixiert werden kann, und
wobei das Bezugselement (110) und die Stütze (120) an unterschiedlichen Teilen der Führung (140) angebracht sind, die aus der Basis (441) und dem Führungselement (445) ausgewählt sind.

6. Einrichtung (100) nach einem der vorhergehenden Ansprüche, wobei der Abstand zwischen den beiden Armelementen (130) einstellbar ist.

7. Einrichtung (100) nach einem der vorhergehenden Ansprüche, wobei das Bezugselement (110) ein Material umfasst, das durch einen Magneten angezogen werden kann, und an dem Bezugselement (110) eine Bezugshilfe (560) befestigt werden kann, wobei die Bezugshilfe (560) ebenfalls ein Material umfasst, das durch einen Magneten angezogen werden kann, und mindestens ein Material, das durch einen Magneten des Bezugselements (110) angezogen werden kann, und wobei die Bezugshilfe (560) einen Magneten (561) umfasst.

8. Einrichtung (100) nach einem der vorhergehenden Ansprüche, wobei das Bezugselement (110) einen ersten zentralen Abschnitt (211) und einen zweiten peripheren Abschnitt (212) umfasst, wobei der erste zentrale Abschnitt (211) und der zweite periphere Abschnitt (212) relativ zueinander parallel in unterschiedlichen Ebenen liegen, so dass der Abstand zu der Stütze (120) quer zu der Bewegungsrichtung für den ersten zentralen Abschnitt (211) größer ist als für den zweiten peripheren Abschnitt (212) .

9. Verfahren zum Anfertigen von Handsträußen, **dadurch gekennzeichnet, dass** eine Einrichtung (100) nach einem der Ansprüche 1 bis 8 verwendet wird und Pflanzenteile
- mit den Ansichtsenden davon gegen das Bezugselement (110) und
- mit gekreuzten Stielen
an einem Positionierungselement (200) zum Ausbilden der gemischten Sträuße positioniert werden.

## Revendications

1. Appareil (100) de préparation de bouquets mixtes en positionnant des parties de plante,
les parties de plante
- comprenant chacune une tige, et
- ayant chacune une extrémité visible et une extrémité tige ; et l'appareil (100)
- comprenant un dispositif de transport sans fin (102) pour former les bouquets mixtes sur le dispositif de transport sans fin (102), le dispositif de transport sans fin (102) ayant une surface de transport munie d'une pluralité d'organes de référence (110) pour positionner les extrémités visibles des parties de plante, lesdits organes de référence (110) étant distribués dans la direction de transport du dispositif de transport sans fin (102) sur le dispositif de transport sans fin (102), et
- étant conçu pour supporter les bouquets mixtes pendant leur formation au moyen des parties de plante, le dispositif de transport sans fin (102) comprenant une pluralité d'organes de positionnement (200) dans la direction de transport, un organe de positionnement (200) comprenant l'organe de référence (110) et deux éléments bras (130) ;
l'appareil étant **caractérisé en ce que** l'organe de positionnement (200) comprend un support (120), et dans lequel
- le dispositif de transport sans fin (102) est, en référence à la direction de transport, à l'emplacement de l'organe de référence (110), muni de l'organe de positionnement (200), et, à une distance de l'organe de référence (110) concerné transversale à la direction de transport du dispositif de transport sans fin (102), muni du support (120) pour supporter les tiges, à une distance de la surface de transport du dispositif de transport sans fin (102) relativement près des extrémités tige,
- les éléments bras (130) de l'organe de positionnement sont situés entre l'organe de référence (110) et le support accompagnant (120) pour recevoir les parties de plante relativement près des extrémités visibles, et
- les organes de positionnement (200) étant re-réglables, les organes de référence (110) et les supports (120) étant re-réglables les uns par rapport aux autres.

2. Appareil (100) selon la revendication 1, dans lequel le dispositif de transport sans fin (102) est une bande transporteuse (102).

3. Appareil (100) selon la revendication 1 ou 2, dans lequel la hauteur des supports (120) par rapport à la surface du dispositif de transport sans fin (102) est réglable.

4. Appareil (100) selon l'une quelconque des revendications précédentes, dans lequel la distance entre les organes de référence (110) et les supports (120) est réglable.

5. Appareil (100) selon l'une quelconque des revendications précédentes,
dans lequel le dispositif de transport sans fin (102) est muni de guides (140), un guide (140)
- comprenant une base (441) qui s'étend transversalement à la direction de transport et qui est connectée à la surface de transport,
- comprenant un organe de guidage (445) qui coopère avec la base (441), ledit organe de guidage (445) étant, dans un état non fixé, mobile dans une direction transversale par rapport à la base (441), et pouvant être fixé dans une première position et dans une seconde position, et
l'organe de référence (110) et le support (120) étant fixés à différentes parties du guide (140), choisies parmi la base (441) et l'organe de guidage (445).

6. Appareil (100) selon l'une quelconque des revendications précédentes, dans lequel la distance entre les deux éléments bras (130) est réglable.

7. Appareil (100) selon l'une quelconque des revendications précédentes, dans lequel l'organe de référence (110) comprend un matériau qui peut être attiré par un aimant, et une aide de référence (560) peut être fixée sur l'organe de référence (110), l'aide de référence (560) comprenant également un matériau qui peut être attiré par un aimant et au moins un matériau qui peut être attiré par un aimant de l'organe de référence (110), et l'aide de référence (560) comprenant un aimant (561).

8. Appareil (100) selon l'une quelconque des revendications précédentes, dans lequel l'organe de référence (110) comprend une première section centrale (211) et une seconde section périphérique (212), la première section centrale (211) et la seconde section périphérique (212) reposant parallèlement l'une par rapport à l'autre dans différents plans de sorte que la distance au support (120) transversalement à la direction de déplacement soit plus grande pour la première section centrale (211) que pour la seconde section périphérique (212).

9. Procédé de préparation de bouquets à main, **caractérisé en ce qu'**un appareil (100) selon l'une quelconque des revendications 1 à 8 est utilisé, et des parties de plante sont placées
- avec leurs extrémités visibles contre l'organe de référence (110), et
- avec des tiges croisées,
sur un organe de positionnement (200) pour former le bouquet mixte.
